# EUROPÄISCHE PATENTSCHRIFT

(11) **EP 1 056 990 B1**
(45) Veröffentlichungstag und Bekanntmachung des Hinweises auf die Patenterteilung: **10.09.2003**
(21) Anmeldenummer: 98966985.8
(22) Anmeldetag: 23.12.1998
(51) Int. Cl.: G01F 11/26

(54) **DOSIERER FÜR EINEN BEHÄLTER**
DOSING DEVICE FOR A CONTAINER
DOSEUR POUR CONTENEUR

(30) Priorität: 27.02.1998 EP 98103404; 12.06.1998 DE 19826278
(43) Veröffentlichungstag der Anmeldung: 06.12.2000
(73) Patentinhaber: COMPO Gesellschaft mbH & Co. KG, 48157 Münster (DE)
(72) Erfinder: PASBRIG, Matthias, D-48429 Rheine (DE); FOCKENBROCK, Gisela, D-48157 Münster (DE); LANGLOIS, Oliver, F-78540 Vernouillet (FR); FANI, Gerard, F-70150 Etuz (FR); HINS, Johannes, D-59846 Sundern-Hagen (DE)
(74) Vertreter: Isenbruck, Günter, Dr.
(86) Internationale Anmeldenummer: EP9808461
(87) Internationale Veröffentlichungsnummer: WO99044019

(56) Entgegenhaltungen:
- DE-U- 29 704 099
- US-A- 4 690 304

## Beschreibung

Ein Dosierer für einen Behälter dient zur Dosierung von flüssigen Produkten, die aus einem Behälter in den Dosierer eintreten, bevor sie in einer gewünschten Menge ausgeschüttet werden.

Es sind Dosierflaschen mit Steigrohr bekannt, bei denen die Flasche aus zwei Kammern, nämlich einem Vorratsbehälter und einem Dosierer besteht. Das flüssige Produkt wird durch Zusammendrücken des Vorratsbehälters über ein Steigrohr in den Dosier geleitet. Der Dosierer selbst ist mit einer Meßskala versehen, um verschiedene Mengen zu dosieren. Wird der Dosierer über die maximale Dosiermenge aufgefüllt, fließt die überschüssige Menge über das Steigrohr wieder in den Vorratsbehälter zurück. Nachteilig ist hier, daß die Dosierung nur mit geöffnetem Dosierer erfolgen kann.
Soll weniger als die maximale Dosiermenge dosiert werden, darf nur geringer Druck auf die Flasche ausgeübt werden, damit die angestrebte Dosiermenge nicht überschritten wird. Wird zuviel Druck auf die Flasche ausgeübt, besteht nicht die Möglichkeit, die überdosierte Menge wieder in den Vorratsbehälter zurückzuführen. Es läßt sich daher nur eine Dosiermenge genau abfüllen.

Aus der US-A-4 079 859 ist weiterhin eine Flasche bekannt, die wiederum aus zwei Kammern, nämlich dem Vorratsbehälter und dem Dosierer besteht. Durch Kippen der Flasche um 90° fließt das Produkt von dem Vorratsbehälter in den Dosierer. Um den Füllstand des Dosierers abzulesen, wird die Flasche anschliessend wieder in eine aufrechte Position gebracht. Durch mehrmaliges Kippen und Aufrichten erfolgt die genaue Dosierung, wodurch sich unterschiedliche Mengen dosieren lassen.

Zwar wird hier der Anwender bei Dosierung mit dem Produkt vor Kontakt mit dem Produkt geschützt, der Dosierbehälter kann sich aber während der Abfüllung bzw. während des Transportes mit dem Produkt füllen. Je nach Konsistenz und Farbe des Produkts kann dies die Akzeptanz des Produkts vermindern. Ein wesentlicher Nachteil liegt darin, daß eine genaue Dosierung dann nicht mehr möglich ist, wenn der Neigungswinkel der Flasche beim Ausgießen der dosierten Menge in einen anderen Behälter um 90° liegt, da in diesem Fall Produkt aus dem Vorratsbehälter nachfließt.

In der DE-U-297 04 099 wird dieser Nachteil dadurch vermieden, daß ein auf dem Behälter befestigter Dosierer mit einem über dem Deckelteil betätigbaren Schließelement versehen ist. Die Verbindung ist dergestalt, daß bei abgenommenem Deckelteil das Schließelement die Durchgangspassage in eine Dosiererkammer verschließt und daß bei aufgeschraubtem Deckelteil das Schließelement die Durchgangspassage zwischen Behälter und Dosiererkammer freigibt. Hierdurch wird ein Nachfließen des Produkts bei abgenommenem Deckelteil sicher verhindert. Allerdings kann sich nach wie vor während der Abfüllung bzw. des Transports der Dosierer mit dem Produkt füllen.

Die Aufgabe der Erfindung besteht darin, unterschiedliche Mengen einer Flüssigkeit zu dosieren, ohne daß der Anwender mit dem Produkt in Berührung kommt und ohne daß Produkt nachfließt. wobei wahrend des Transports vor der ersten Betätigung der Dosierer frei von Produkt hleiben soll.
Die Aufgabe wird gelöst durch einen Dosierer für einen Vorratsbehälter, wobei der Vorratsbehälter an seiner Austrittsöffnung eine Anschlußstutzen aufweist, an dem der Dosierer befestigt ist. Der Dosierer weist ein mittels eines Verschlußdeckels betätigbares Verschlußstück auf, welches mit dem Verschlußdeckel in einem derartigen Wirkzusammenhang steht, daß beim Öffnen des Veschlußdeckels das Verschlußstück die Austrittsöffnung des Vorratsbehälters verschließt, wohingegen heim Schließen des Verschlußdeckels das Veschlußstück die Austrittsöffnung des Vorratsbehälters freigibt. Erfindungsgemäß weist der Dosierer vor seinem ersten Gebrauch im Bereich der Austrittsöffnung des Vorratsbehälters ein stoffschlüssig verbundenes Dichtelement auf, und das Verschlußstück weist Mittel zum Entfernen des Dichte elements, so daß eine flüssigkeitsdurchlässige Verbindung zwischen dem Vorratsbehälter und dem Dosierer hergestellt wird.

Der erfindungsgemäße Dosierer hat den Vorteil, daß beim Befüllen des Dosierers durch das Schließen des Verschlußdeckels der Anwender vor dem Produkt geschützt ist, wobei durch das geöffnete Verschlußstück das flüssige Produkt aus dem Vorratsbehälter in den Dosierer eingebracht werden kann. Ist die gewünschte Menge abgemessen, so kann beim Ausschütten des Produkts aus dem Dosierer nach Öffnung des Verschlußdeckels kein weiteres flüssiges Produkt aus dem Vorratsbehälter nachfließen. da das Verschlußstück die Austrittsöffnung des Vorratsbehälters verschließt.

Durch den Einsatz eines stoffschlüssig mit dem Dosierer verbundenen Dichtelements wird vor der ersten Anwendung ein doppelter Verschluß hergestellt, so daß das Produkt während des Transports auch nicht in den Dosierer fließen kann. Beim erstmaligen Öffnen wird dieses Dichtelement zerstört und die Dosiermöglichkeit ist gegeben. Hierzu weist das Verschlußstück Mittel zur Herstellung einer flüssigkeitsdurchlässigen Verbindung zwischen dem Vorratsbehälter und dem Dosierer auf.

Vorteilhafterweise wird der Wirkzusammenhang zwischen dem Verschlußdekel und dem Verschlußstück über gegenläufige Gewinde hergestellt. Dazu weist der Verschlußdeckel ein erstes Gewinde zur Verbindung mit dem Dosierer sowie ein zweites zum ersten gegenläufiges Gewinde zur Betätigung des Verschlußstücks auf. Unter einem gegenläufigen Gewinde ist hier ein Gewinde zu verstehen, welches so ausgeführt ist, daß beim Aufschrauben des Verschlußdeckels das Verschlußstück vom Verschlußdeckel weg und zur Austrittsöffnung des Vorratsbehälters hin bewegt wird. Dies läßt sich dadurch erreichen, daß das zweite Gewinde gleichsinnig zum ersten Gewinde und mit größerer Stergung als das erste Gewinde ausgeführt ist.

Um ein unbeabsichtiges Lösen des Verschlußdeckels zu vermeiden, können Mittel zur Verdrehsicherung vorgesehen sein.

Vorteilhafterweise wird die Dichtung zwischen Verschlußstück und Dosierer durch Dichtlippen hergestellt. Hierzu weist das Verschlußstücl eine Dichtlippe auf.

Auch der Verschlußdeckel kann Dichtmittel zum Verschluß des Dosierers aufweisen.

In der Zeichnung ist ein Ausführungsbeispiel der Erfindung dargestellt. Es zeigt die
Fig. 1 einen Vorratsbehälter mit Dosierer und Kappe, die
Fig. 2 einen erfindungsgemäßen Dosierer sowie eine dazugehörige Kappe mit Verschlußstück im Schnitt, die
Fig. 2a eine Draufsicht auf den Dosierer aus Fig. 2 in einer besonderen Ausgestaltung mit Rückführmitteln, die
Fig. 3 den an dem Vorratsbehälter angebrachten Dosierer mit Kappe und Verschlußstück in Transportstellung vor dem ersten Betätigen und die
Fig. 4 den Dosierer nach dem erstmaligen Betätigen.

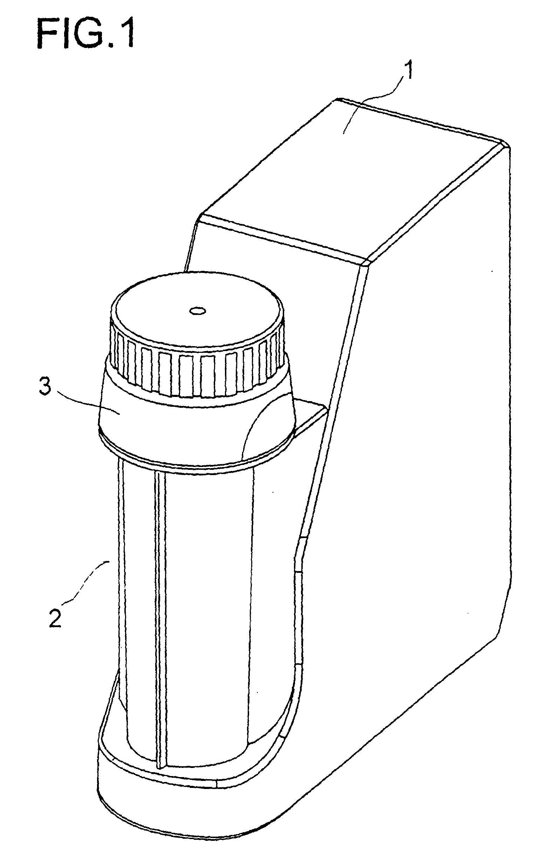

Die in Fig. 1 dargestellte Flasche besteht hauptsächlich aus dem Vorratsbehälter 1 und dem Dosierer 2. Der Dosierer 2 ist mit einem Verschluß in Form einer Kappe 3 versehen, welche eine Kindersicherung aufweist. Diese Bauteile werden separat hergestellt und durch einen separaten Arbeitsgang montiert. Dabei ist die Gestaltung sowie das Volumen des Vorratsbehälters 1 bis auf die Anschlußmaße an den Dosierer 2 variabel.

Der Dosierer 2 besteht aus einem thermoplastischen Kunststoff, der je nach Aggressivität des Produktes fluorodiert werden kann, und ist zudem transparent, um die Ablesbarkeit zu gewährleisten. Auf das Erfordernis der Transparenz kann bei der Kappe 3 verzichtet werden.

Der Vorratsbehälter 1 besteht aus einem blasgeformten Hohlkörper, der ebenfalls aus thermoplastischen Kunststoffen hergestellt wird. Nach der Befüllung des Vorratsbehälters 1 mit dem flüssigen Produkt wird der vormontierte Dosierer 2 mit dem Vorratsbehälter 1 verbunden.

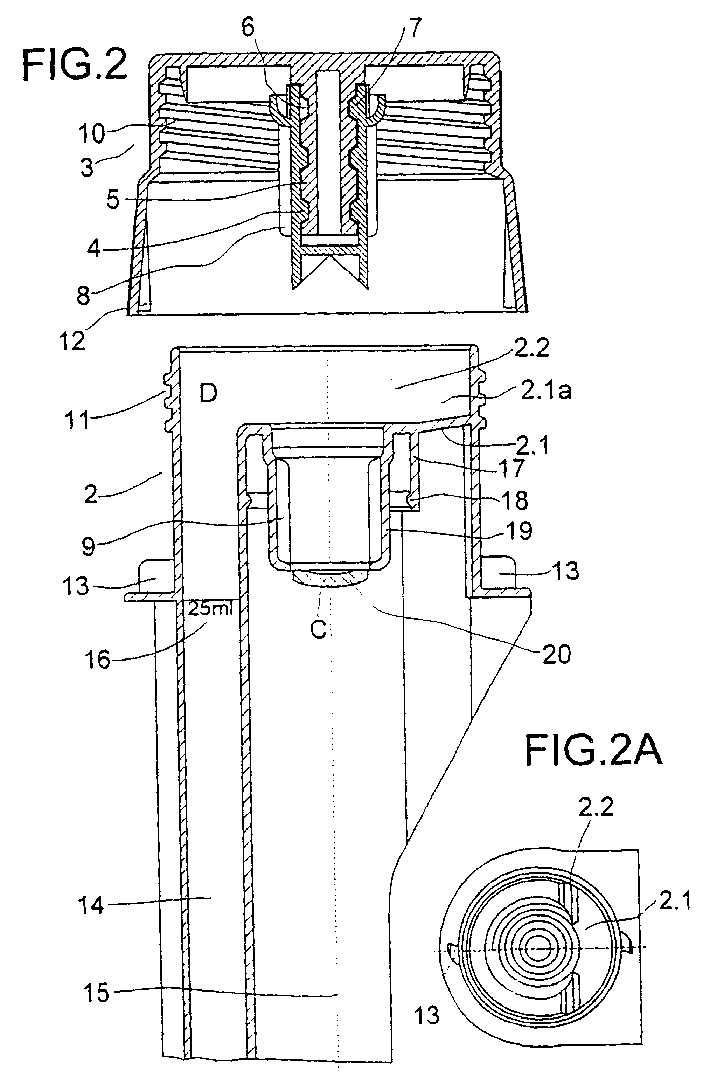

In Fig. 2 sind der Dosierer 2 und die Kappe 3 dargestellt, wobei in der Kappe 3 ein Verschlußstück 4 angeordnet ist. Dieses Verschlußstück 4 ist an einem mittig in der Kappe 3 angeordneten Zapfen 5 mit einem Außengewinde 6 aufgeschraubt, wozu das Verschlußstück 4 ein entsprechendes Innengewinde 7 aufweist. Das Verschlußstück ist weiterhin mit Längsrippen 8 versehen, welche mit einer entsprechenden Nut 9 am Dosierer 2 derart zusammenwirken, daß eine Verdrehsicherung des Verschlußstückes 4 bei gleichzeitiger axialer Beweglichkeit hergestellt wird.

Die Kappe 3 ist im oberen Bereich ihrer Innenfläche mit einem Gewinde 10 versehen, welches zu dem Gewinde 6, 7 gegenläufig ist, d.h. eine umgekehrte Steigung hat. Dieses Gewinde 10 in der Kappe 3 findet seine Entsprechung in dem Außengewinde 11 am oberen Ende des Dosierers 2. Weiterhin sind in der Kappe 3 im unteren Bereich der Innenwand Vorsprünge 12 vorgesehen, die mit entsprechenden Vorsprüngen 13 am Dosierer 2 derart zusammenwirken, daß eine Kindersicherung hergestellt wird.

Der Dosierer 2 weist einen Dosierbereich 14 auf, der sich im wesentlichen parallel zur Mittelachse 15 des Dosierers 2 erstreckt und der mit einer Markierung 16 zumindest einen Füllstand anzeigt. Die Querschnittsfläche des Dosierbereichs 14 senkrecht zur Mittelachse 15 ist wesentlich kleiner als die Querschnittsfläche entlang der Mittelachse 15, was zur Folge hat, daß in den Dosierbereich einströmendes flüssiges Produkt sich unmittelbar in eine sichtbare Änderung der Füllhöhe des Dosierbereichs 14 niederschlägt.

Der Dosierer 2 weist weiterhin einen Anschlußstutzen 17 auf, dessen Zentrum auf der Mittelachse 15 liegt. Dieser Anschlußstutzen 17 ist an seiner Innentlache mit einem umlaufenden Bund 18 versehen, der aber auch unterbrochen, d.h. in einzelne Segmente unterteilt sein kann.

Im Inneren des Anschlußstutzens 17, aber bezüglich der Mittelachse 15 in radialem Abstand zu diesem, ist ein Führungsteil 19 angeordnet, welches mit einem Dichtelement, beispielsweise einer Membran 20 im Bereich seiner Stirnseite verschlossen ist. An der Innenwand des Führungsteils 19 sind Führungsnuten 9 oder sonstige Führungsmittel, z.B. Rippen, Nocken oder Noppen angeordnet, welche mit den Führungsrippen 8 des Verschlußstückes 4 zusammenwirken.

Schließlich weist der Dosierer 2 eine schräg zum Führungsteil 19 zulaufende Fläche 2.1 auf, welche der Rückführung von überschüssigem flüssigen Produkt dient. Zur Verstärkung der Rückführung kann auch eine steilere Fläche 2.1a gewählt werden, und es können Rückführmittel 2.2 als seitliche Begrenzung vorgesehen werden.

Die Lage der Rückführmittel 2.2 ist aus Fig. 2a ersichtlich, in welcher auch die Vorsprünge 13 zu erkennen sind. Die Rückführmittel 2.2 erfüllen die folgende Funktion:
Falls versehentlich zuviel flüssiges Produkt in den Dosierbereich 14 gelangt, kann dieses durch entsprechendes Kippen des Dosierers 2 in den Bereich der schrägen Fläche 2.1 gebracht werden. Die Rückführmittel 2.2, welche als Stege ausgebildet sind, verhindern dann ein Zurückfließen des flüssigen Produkts in den Dosierbereich 14. Das überschüssige flüssige Produkt läuft daher entlang der schrägen Fläche 2.1 zurück in den Vorratsbehälter 1.

Das Verschlußstück 4 wird bei der Montage zunächst in die Kappe 3 eingeschraubt, anschließend wird die Kappe 3 auf das obere Ende des Dosierers 2 gegen den Widerstand der Gewinde 10,11 aufgedrückt. Die Gewinde 10,11 sind zu diesem Zweck mit die Montage begünstigenden schrägen Flanken ausgeführt, wobei ein Lösen nach der Montage durch steile Flanken verhindert wird.

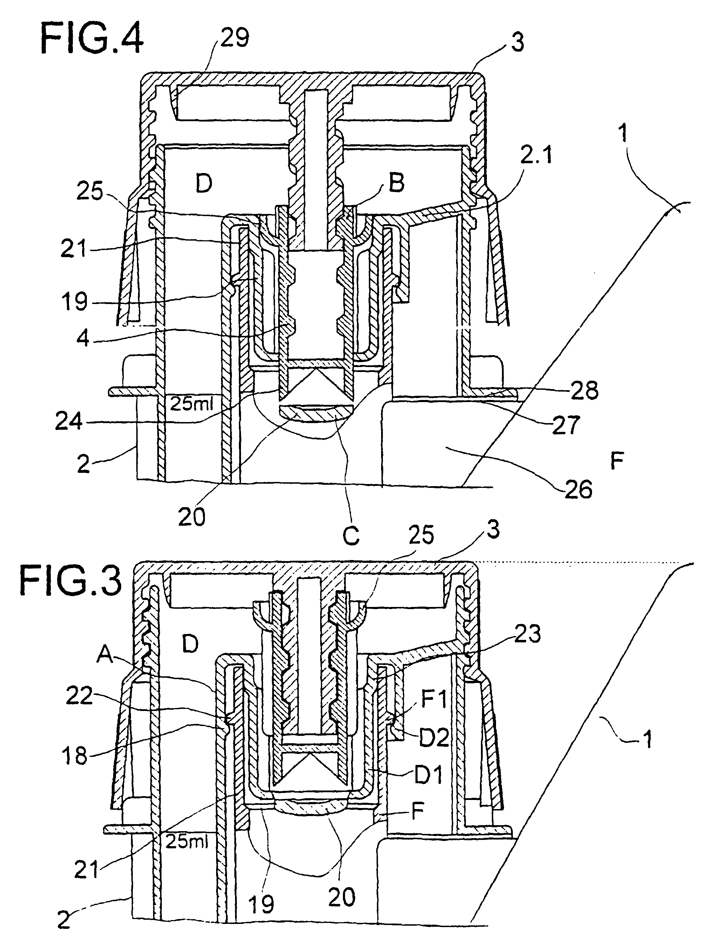

In Fig 3 ist der Dosierer 2 nach der Montage an dem Vorratsbehälter 1 gezeigt.

Dabei wird das Führungsteil 19 in einen am Vorratsbehälter 1 angeformten Stutzen 21 eingesteckt. Anschließend wird der Dosierer 2 so weit auf den Stutzen 21 gedrückt, daß der umlaufende Bund 18 am Anschlußstutzen 17 an außenliegenden Vorsprüngen 22 des Stutzens 21 unter Krafteinwirkung vorbeigeführt wird. Durch den umlaufenden Bund 18 am Dosierer 2 und die Vorsprünge 22 am Stutzen 21 wird der Dosierer 2 mit dem Vorratsbehälter 1 so verrastet, daß eine Trennung nur unter hohem Kraftaufwand möglich ist.

Weiterhin kommt es zu einer dichtenden Anlage der Außenfläche des Führungsteils 19 an der Innenfläche des Stutzens 21 im oberen Bereich. Diese Dichtfläche 23 erstreckt sich parallel zur Längsachse und bewirkt eine zuverlässige Abdichtung.

In diesem Zustand wird die Flasche transportiert. Wegen der Abdichtung des Dosierers 2 gegenüber dem Vorratsbehälter 1 im Bereich der Dichtfächen 23 kann das flüssige Produkt nicht aus dem Vorratsbehälter 1 austreten. Da weiterhin die Membran 20 den Dosierer 2 dicht gegenüber dem Vorratsbehälter 1 abschließt, kann das flüssige Produkt auch nicht in den Dosierer 2 einfließen.

In Fig. 4 ist der an dem Vorratsbehälter 1 angebrachte Dosierer 2 in einem Zustand dargestellt, in welchem das Verschlußstück 4 innerhalb des Führungsteils 19 durch Drehung der Kappe 3 nach unten verschoben wurde, so daß die Membran 20 nun abgetrennt ist. Hierzu ist das Verschlußstück 4 mit einer Schneidkanten - aufweisenden Spitze 24 versehen. Die Längsverschiebung des Verschlußteils 4 wird dadurch bewirkt, daß die Kappe 3 unter Lösen der Kindersicherung abgeschraubt wird. Durch das zum Gewinde der Kappe 3 gegenläufige, d.h. gleichsinnig und mit größerer Steigung ausgeführte Gewinde des Verschlußstückes wird dessen Spitze 24 gegen die Membran 20 gedrückt. Dabei durchstößt die Spitze 24 die Membran 20 des Dosierers 2.

In dieser Stellung, in der die Kappe nicht notwendigerweise vollständig abgeschraubt sein muß, verschließt das Verschlußstück 4 mittels einer außenliegenden, umlaufenden Dichtlippe 25 den Durchfluß in den Dosierer 2. Die Dichtlippe 25 liegt dabei in etwa im Bereich der Dichtflächen 23 zwischen dem Stutzen 21 und dem Führungsteil 19. In dieser Stellung ist nach wie vor sichergestellt, daß kein flüssiges Produkt aus dem Vorratsbehälter austreten kann, und dies, obwohl die Membran 20 entfernt wurde.

Zum erstmaligen Füllen des Dosierers 2 ist es nun erforderlich, die Kappe 3 wieder zuzuschrauben, wodurch sich wegen des gegenläufigen Gewindes das Verschlußstück 4 hebt und die Dichtlippe 25 nicht mehr zur Anlage kommt. Bei vollständig zugeschrubter Kappe 3 und vollständig geöffnetem Verschlußstück 4 findet man die in Fig. 3 dargestellte Lage wieder, wobei dann allerdings die Membran 20 entfernt ist. Zum Befüllen des Dosierers kann das flüssige Produkt durch eine Kippbewegung aus dem Vorratsbehälter 1 entlang des Verschlußstückes 4 in den Dosierbereich fließen. Überschüssiges Produkt kann durch eine entgegengesetzte Kippbewegung wieder aus dem Dosierer in den Vorratsbehälter 1 zurückgeführt werden. Hierzu ist die Fläche 2.1 hilfreich.

Um den Inhalt des Dosierers 2 verwenden zu können, wird die Kappe 3 abgeschraubt. Durch die Drehbewegung der Kappe 3 wird das Verschlußstück 4 in das Führungsteil 19 des Dosierers 2 gedrückt. Dabei kann das Verschlußstück 4 mittels seiner umlaufenden Lippe auch in einer entsprechenden Ausbuchtung an dem Führungsteil 19 einrasten. Wesentlich ist hier aber eine dichtende Anlage. Aufgrund dieser dichtenden Anlage ist es nun unmöglich, daß das flüssige Produkt aus dem Vorratsbehälter 1 in den Dosierer 2 nachfließen kann, wenn das in dem Dosierer 2 befindliche flüssige Produkt durch eine Kippbewegung ausgeleert wird.

Um den Dosierer 2 am Vorratsbehälter 1 abzustützen, ist der Behälter 1 mit einer Schulter 26 versehen, die sich von einer Bchälterwand zum Stutzen 21 hin erstreckt und eine Auflagefläche 27 aufweist. Auf dieser Auflagefläche 27 stützt sich der Dosierer 2 mittels einer Stützfläche 28 ab.

Weiterhin ist in Fig. 4 an der Kappe 3 eine Dichtlippe 29 dargestellt, welche mit dem Dosierer 2 zusammenwirkt. Dies ist genauer in Fig. 3 dargestellt. Hier liegt die Dichtlippe 29 an der Innenwand des Dosierers 2 dichtend an und verhindert einen Austritt von im Dosierer befindlichem Produkt während des Befüllens des Dosierers.

Die Dimensionen der einzelnen Bauteile zueinander sind so zu wählen, daß zum einen die erforderliche Dichtheit hergestellt werden kann, wobei gleichzeitig die Montierbarkeit gewährleistet sein muß. Weiterhin muß die Verankerung des Dosierers 2 an dem Vorratsbehälter 1 eine derartige Festigkeit aufweisen, daß ein Loslösen des Dosierers vom Vorratsbehälter selbst unter Extrembelastungen vermieden wird.

Insgesamt ist mit dem Dosierer eine genaue Dosierung unterschiedlicher Mengen möglich, wobei der Anwender bei der Dosierung nicht mit dem Produkt in Kontakt kommt. Weiterhin kann sich der an dem Vorratsbehälter angebrachte Dosierer während der Abfüllung bzw. des Transports nicht mit dem Produkt füllen.

## Patentansprüche

1. Dosierer für einen Vorratsbehälter (1), wobei der Vorratsbehälter (1) an seiner Austrittsöffnung einen Anschlußstutzen (21) aufweist, an dem der Dosierer (2) befestigt ist, wobei der Dosierer (2) ein mittels eines Verschlußdeckels (3) betätigbares Verschlußstück (4) ausweist, welches mit dem Verschlußdeckel (3) in einem derartigen Wirkungszusammenhang steht, daß beim Öffnen des Verschlußdeckels (3) das Verschlußstück (4) die Austrittsöffnung des Vorratsbehälters (1) verschließt, wohingegen beim Schließen des Verschlußdeckels (3) das Verschlußstück (4) die Austrittsöffnung des Vorratsbehälters (1) freigibt, **dadurch gekennzeichnet, daß** der Dosiercr (2) vor seinem ersten Gebrauch im Bereich der Austrittsöffnung des Vorratsbehälters (1) ein stoffschlüssig verbundenes Dichtelement (20) aufweist und daß das Verschlußstück (4, 24) Mittel (24) zum Entfernen des Dichtelementes (20) aufweist, so daß eine flüssigkeitsdurchlässige Verbindung zwischen dem Vorratsbehälter (1) und dem Dosierer hergestellt wird.

2. Dosierer nach Anspruch 1, **dadurch gekennzeichnet, daß** der Verschlußdeckel (3) ein erstes Gewinde (10) zur Verbindung mit dem Dosierer sowie ein zweites Gewinde (6) höherer Steigung zur Betätigung des Verschlußstücks (4) aufweist.

3. Dosierer nach einem der Ansprüche 1 oder 2, **dadurch gekennzeichnet, daß** das Verschlußstück (4) über Mittel (8) zur Verdrehsicherung verfügt.

4. Dosierer nach einem der Ansprüche 1 bis 3, **dadurch gekennzeichnet, daß** das Verschlußstück (4) eine Dichtlippe (25) aufweist.

5. Dosierer nach einem der Ansprüche 1 bis 4, **dadurch gekennzeichnet, daß** der Verschlußdeckel (3) Dichtmittel (29) zum Verschluß des Dosierers (2) aufweist.

## Claims

1. Metering device for a storage container (1), the storage container (1) having at its outlet opening an attachment piece (21) on which the metering device (2) is secured, the metering device (2) having a closure piece (4) which can be activated by means of a closure lid (3) and which is in operational engagement with the closure lid (3) in such a manner that when the closure lid (3) is opened, the closure piece (4) closes the outlet opening of the storage container (1), whereas when the closure lid (3) is shut, the closure piece (4) frees the outlet opening of the storage container (1), **characterized in that** the metering device (2) has, prior to its first use, an integrally connected sealing element (20) in the area of the outlet opening of the storage container (1), and the closure piece (4, 24) has means (24) for removing the sealing element (20) such that a liquid-permeable connection is established between the storage container (1) and the metering device (2).

2. Metering device according to Claim 1, **characterized in that** the closure lid (3) has a first thread (10) for connection to the metering device and a second thread (6) of higher pitch for activating the closure piece (4).

3. Metering device according to either of Claims 1 and 2, **characterized in that** the closure piece (4) has means (8) for securing it against turning.

4. Metering device according to one of Claims 1 to 3, **characterized in that** the closure piece (4) has a sealing lip (25).

5. Metering device according to one of Claims 1 to 4, **characterized in that** the closure lid (3) has sealing means (29) for closing the metering device (2).

## Revendications

1. Doseur pour une trémie (1), dans lequel la trémie (1) comprend un ajutage (21) sur son orifice de sortie, sur lequel le doseur (2) est fixé, dans lequel le doseur (2) comprend un organe d'obturation (4) pouvant être actionné au moyen d'un couvercle de fermeture (3), ledit organe se trouvant dans un tel rapport de coopération avec le couvercle de fermeture (3) que lors de l'ouverture du couvercle de fermeture (3), l'organe d'obturation (3) obture l'orifice de sortie de la trémie (1), tandis que lors de la fermeture du couvercle de fermeture (3), l'organe d'obturation (4) libère l'orifice de sortie de la trémie (1), **caractérisé en ce que** le doseur (2) comporte avant sa première utilisation dans la zone de l'orifice de sortie de la trémie un élément d'étanchéité (20) lié par assemblage de matières et **en ce que** l'organe d'obturation (4, 24) comporte un moyen (24) pour enlever l'élément d'étanchéité (20), de telle sorte qu'une liaison perméable aux liquides est établie entre la trémie (1) et le doseur.

2. Doseur selon la revendication 1, **caractérisé en ce que** le couvercle de fermeture (3) comprend un premier filetage (10) pour la liaison avec le doseur ainsi qu'un second filetage (6) d'une inclinaison supérieure pour l'actionnement de l'organe d'obturation (4).

3. Doseur selon l'une quelconque des revendications 1 ou 2, **caractérisé en ce que** l'organe d'obturation (4) dispose de moyens (8) de protection contre la torsion.

4. Doseur selon l'une quelconque des revendications 1 à 3, **caractérisé en ce que** l'organe d'obturation (4) comporte une lèvre d'étanchéité (25).

5. Doseur selon l'une quelconque des revendications 1 à 4, **caractérisé en ce que** le couvercle de fermeture (3) comprend un moyen d'étanchéité (29) pour la fermeture du doseur (2).
